# EUROPEAN PATENT APPLICATION

(11) **EP 2 690 588 A1**
(43) Date of publication of application: **29.01.2014**
(21) Application number: 13177901.9
(22) Date of filing: 24.07.2013
(51) Int. Cl.: G06Q 10/10

(54) **Function based on a cloud service**

(30) Priority: 24.07.2012 KR 20120080816
(71) Applicant: Samsung Electronics Co., Ltd, Gyeonggi-do 443-742 (KR)
(72) Inventor: Kim, Jinyong, 443-742 Gyeonggi-do (KR); Shin, Youngsun, 443-742 Gyeonggi-do (KR)
(74) Representative: Birchenough, Lewis

(57) **Abstract**

A method and system perform a memo function based on a cloud service and an electronic device supports the memo function. A user may enter and edit a memo on a thumbnail view screen and share the memo with other users. The method includes displaying a thumbnail view screen representing content items stored in a cloud server providing cloud services as thumbnails; detecting memo input on the thumbnail view screen; and storing an input memo in association with the thumbnail view screen.

## Description

### BACKGROUND OF THE INVENTION

### 1. Field of the Invention

The present invention relates generally to a function (e.g. memo function) based on a cloud service, and more particularly, although not exclusively, to a method, apparatus and system for providing a function (e.g. memo function) based on a cloud service, and an electronic device supporting the same. In certain embodiments of the present invention, a memo may be freely written and edited on a thumbnail view screen of content items and the memo may be shared among multiple users.

### 2. Description of the Related Art

Electronic devices in the related art may provide various user functions. For example, an electronic device including a camera module may provide a function enabling the user to store, manage and search photographs captured by the camera module or received from an external source. An electronic device capable of storing and managing phone numbers may provide a function enabling the user to easily find a specific phone number for placing a call to another electronic device. As illustrated above, an electronic device in the related art may provide various functions so as to meet specific user needs.

For example, an electronic device in the related art may use a cloud service to share content with other electronic devices. An electronic device having subscribed to a cloud service may upload and download content. As existing cloud services have typically been used to handle only simple tasks, for example transferring content stored in one electronic device to another electronic device, existing cloud services have failed to attract much attention. However, in the related art, as cloud services have become more sophisticated and user requirements have become more diverse, the amount and kinds of stored content have vastly increased. In this regard, functions that more effectively satisfy user needs in a cloud service environment are desired.

### SUMMARY OF THE INVENTION

It is an aim of certain embodiments of the present invention to address, solve, mitigate or obviate, at least partly, at least one of the problems and/or disadvantages associated with the related art, for example at least one of the above problems and/or disadvantages. Certain embodiments of the present invention aim to provide at least one advantage over the related art, for example at least one of the advantages described below.

Accordingly, certain embodiments of the present invention provide a method, apparatus and system for providing a function (e.g. a memo function) based on a cloud service wherein text (e.g. in the form of a memo), a figure, and/or a drawing, and the like, can be entered by a user on a screen (e.g. a thumbnail view screen) displaying content items stored in a cloud server (e.g. as thumbnails), and an electronic device supporting the same.

Certain embodiments of the present invention provide a method, apparatus and system for providing a function (e.g. a memo function) based on a cloud service that enable an electronic device to share text (e.g. in the form of a memo), a figure and/or a drawing, and the like, entered on a screen (e.g. a thumbnail view screen) with another electronic device, and an electronic device supporting the same.

Certain embodiments of the present invention provide a method, apparatus and system for providing a function (e.g. a memo function) based on a cloud service wherein (i) text (e.g. in the form of a memo), a figure and/or a drawing, and the like, and (ii) displayed content items (e.g. displayed as thumbnails), are stored in separate layers so that text (e.g. memo), a figure and/or a drawing, and the like, can be freely edited without affecting a displayed content item (e.g. thumbnail), and an electronic device supporting the same.

Certain embodiments of the present invention provide a method, apparatus and system for providing a function (e.g. memo function) based on a cloud service wherein a right, permission or authorization to edit may be assigned to an input text item (e.g. in the form of a memo), figure and/or drawing, and the like, and an electronic device supporting the same.

Certain embodiments of the present invention provide a method, apparatus and system for providing a function (e.g. a memo function) based on a cloud service wherein text (e.g. in the form of memos), figures and/or drawings, and the like, may be grouped for easy management by pairing one text item (e.g. memo), figure and/or drawing, and the like, with at least one displayed content item (e.g. displayed as a thumbnail), and an electronic device supporting the same.

In accordance with an aspect of the present invention, there is provided a system for providing a function (e.g. a memo function) based on a cloud service, the system comprising: a cloud server for storing content items and providing a cloud service (e.g. allowing remote sharing of, and/or remote access to, computing resources over a network); and at least one electronic device for connecting to the cloud server, displaying a screen (e.g. a thumbnail view screen) of content items stored in the cloud server, and storing, upon detection of text (e.g. in the form of a memo), a figure and/or a drawing input on the screen (e.g. thumbnail view screen), an input text item (e.g. memo), figure and/or drawing in association with the screen (e.g. thumbnail view screen).

In accordance with another aspect of the present invention, there is provided an electronic device for supporting a function (e.g. memo function) based on a cloud service, the electronic device comprising: a communication unit (e.g. wireless communication unit) for accessing a cloud server providing a cloud service (e.g. allowing remote sharing of, and/or remote access to, computing resources over a network); a display unit for displaying a screen (e.g. thumbnail view screen) of content items stored in the cloud server; an input unit for entering text (e.g. in the form of a memo), a figure and/or drawing on the screen (e.g. thumbnail view screen); and a control unit for controlling storage of an input text item (e.g. memo), figure and/or drawing in association with the screen (e.g. thumbnail view screen).

In accordance with another aspect of the present invention, there is provided a method for providing a function (e.g. memo function) based on a cloud service, the method comprising the steps of: displaying a screen (e.g. thumbnail view screen) of content items (e.g. displayed as thumbnails) stored in a cloud server providing a cloud service (e.g. allowing remote sharing of, and/or remote access to, computing resources over a network); detecting text (e.g. memo), a figure and/or a drawing input on the screen (e.g. thumbnail view screen); and storing an input text item (e.g. memo), figure and/or drawing in association with the screen (e.g. thumbnail view screen).

Another aspect of the present invention provides a computer program comprising instructions arranged, when executed, to implement a method, system and/or apparatus, in accordance with any one of the above-described aspects. A further aspect of the present invention provides a machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will be more apparent from the following detailed description in conjunction with the accompanying drawings, in which:
FIG. 1 illustrates a configuration of a system including at least one electronic device for providing a memo function based on a cloud service according to an exemplary embodiment of the present invention;
FIG. 2 is a block diagram of the electronic device shown in FIG. 1;
FIG. 3 is a block diagram of the cloud server shown in FIG. 1;
FIG. 4 is a sequence diagram of a method for providing a memo function based on a cloud service according to an exemplary embodiment of the present invention;
FIG. 5 illustrates screen representations for writing a memo according to a first exemplary embodiment of the present invention;
FIG. 6 illustrates screen representations for changing writing instruments according to the first exemplary embodiment of the present invention;
FIG. 7 illustrates screen representations for a memo writing method according to a second exemplary embodiment of the present invention;
FIG. 8 illustrates screen representations for memo writing according to the second exemplary embodiment of the present invention;
FIG. 9 illustrates computation of coordinate information of a memo;
FIGS. 10 and 11 illustrate screen representations for pairing a memo with at least one thumbnail; and
FIG. 12 illustrates screen representations for moving a memo paired with at least one thumbnail.

### DETAILED DESCRIPTION OF EXEMPLARY EMBODIMENTS OF THE

### PRESENT INVENTION

Hereinafter, exemplary embodiments of the present invention are described in detail with reference to the accompanying drawings.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar reference symbols may be used throughout the drawings to refer to the same or similar parts.

Detailed descriptions of well-known functions, processes, constructions and structures may be omitted for clarity and conciseness, and to avoid obscuring the subject matter of the present invention.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Features, elements, components, integers, steps, processes, operations, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

The following description of exemplary embodiments of the present invention is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

In addition, terms described herein, which are defined with reference to the functions of embodiments of the present invention, may be implemented differently depending on a user or operator's intention and practice. Therefore, the terms should be understood on the basis of the disclosure throughout the specification. The principles and features of the present invention may be employed in varied and numerous exemplary embodiments without departing from the scope of the invention, as defined by the claims.

Furthermore, although the drawings illustrate exemplary embodiments of the invention, the drawings are not necessarily to scale and certain features may be exaggerated or omitted in order to more clearly illustrate and explain embodiments of the present invention.

Among the terms set forth herein, a terminal, a mobile device, a portable device, or an electronic device refers to any kind of device capable of processing data which is transmitted to or received from any external entity (e.g. another device, a server, or a network). The terminal, the mobile device, the portable device, or the electronic device may display one or more items (e.g. icons or menus) on a screen (e.g. as part of a Graphical User Interface) to which stored data and/or various executable functions are assigned or mapped. The terminal, the mobile device, the portable device, or the electronic device may be in the form of any suitable type of device, for example a computer, a notebook, a tablet PC, a cellphone, and any known type of electronic device.

Among the terms set forth herein, a screen refers to a display or other output device which visually displays information to a user. In certain embodiments, the screen may optionally be capable of receiving tactile inputs from a user using an input object, for example a stylus, a finger of the user, wherein the tactile inputs may be electronically processed. Certain embodiments may apply any other suitable technique for receiving a user input, for example for conveying a user selection from the user to output devices.

Among the terms set forth herein, an icon refers to a graphical element, for example a figure or a symbol, displayed on the screen of the electronic device. For example, an icon allows a user to easily select a desired function or data (i.e. a function or data mapped or assigned to the icon). In particular, one or more icons may have a mapping or assignment relation with one or more functions being executable in the electronic device or with one or more data items stored in the electronic device, such that the icons may be used for executing functions or selecting data in the electronic device. When a user selects a displayed icon, the electronic device identifies a particular function or data associated with the selected icon (i.e. according to the mapping or assignment relation). Then the electronic device executes the identified function or displays or processes the identified data.

Among the terms set forth herein, data refers to any kind of information processed by the electronic device, including, for example, text e.g. a message), audio and/or images. The data may be received from or transmitted to any external entity, or may be information created within the device, for example when a specific function is executed by the electronic device.

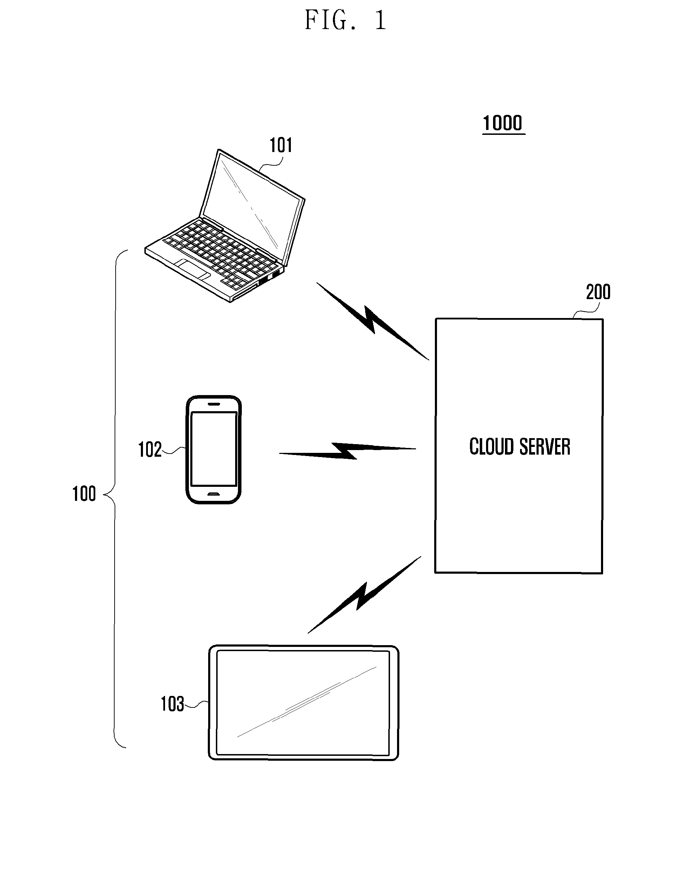

FIG. 1 illustrates a configuration of a system 1000 for providing a memo function based on a cloud service according to an exemplary embodiment of the present invention. A cloud service may comprise a service that allows sharing of computing resources over a network. For example, the computing resources may comprise, for example, processing resources, memory resources, and other types of hardware resources, data resources, software resources, and the like. The resources may be shared such that a first device connected to the network may utilize the resources of one or more other devices connected to the network (possible located remotely from the first device) as though those resources were provided locally within the first device. The cloud service thus allows access (e.g. remote access) to the computing resources over the network. For example, a first device may access data stored in one or more other device, and/or the first device may provide data to one or more other devices. A cloud service may be provided using a cloud server, or may be provided without a cloud server. For example, in the latter case, the functions performed by a cloud server in the former case may be instead performed by one or more devices connected to the network, for example such that the responsibilities of a server are distributed, for example dynamically, to one or more devices.

Although the embodiments described below are described in terms of a memo function, the skilled person will appreciate that the present invention is not limited to a memo function. For example, certain embodiments may allow the input and storage of one or more types of text item other than (or in addition to) a memo. Certain embodiments may allow the input and storage of one or more types of non-text-based item, for example a figure, a drawing and/or other graphical item. Text and non-text items may be input in any suitable way, for example in the form of hand-drawn text, figure and/or drawing, and/or using predefined characters, figures and/or shapes, and/or using various types of drawing and text-inputting tools.

Referring to FIG. 1, the memo function providing system 1000 based on a cloud service may include at least one electronic device 100 and a cloud server 200. The electronic device 100 may be a laptop 101, a smartphone or a personal digital assistant 102, a tablet or pad 103, or any other suitable type of electronic device. The electronic device 100 and the cloud server 200 are connected through a network, for example the Internet or any other suitable type of network. An electronic device 100 may connect to the Internet through a wired and/or wireless connection. In the following description, for ease of description, in the described exemplary embodiments, the electronic device 100 connects to the Internet through a wireless connection. For example, the electronic device100 may connect to the Internet via a network using WI-FI, a wireless technology for data exchange over a computer network, commercially available from the WI-FI ALLIANCE, a Wireless Broadband (WiBro) network or a mobile communication network.

The cloud server 200 may be connected with the at least one electronic device 100 and provide one or more cloud services including, for example, content upload and download services, and synchronization (e.g. data synchronization) services. In particular, the cloud server 200 may provide a storage space (referred to herein as a "sandbox") shareable by multiple electronic devices 100. That is, users of the electronic device 100 with a suitable right, permission or authorization may access one or more sandboxes to identify stored content items in, upload content to, download content from, or remove a content item from, a sandbox.

When the electronic device 100 accesses a sandbox, the cloud server 200 may send a thumbnail view screen of one or more content items stored in the sandbox to the electronic device 100. Here, the thumbnail view screen is used to represent one or more, or all, content items stored in the corresponding sandbox as one or more thumbnails, for example in a preset region (referred to herein as a canvas area). Content items may include, for example, photographs, moving images, music files, and document files. The user may move or resize a thumbnail representing a content item on the thumbnail view screen.

In certain embodiments, a thumbnail representing a content item may be in the form of an image comprising a reduced-size version of the content item. However, the skilled person will appreciate that the content items may be represented by items other than thumbnails in a thumbnail view screen. For example, a content item may be represented in a screen by any suitable graphical entity, including one or more of text, images, icons, symbols, and the like.

The cloud server 200 may receive memo data entered on the thumbnail view screen of the electronic device 100. The cloud server 200 may store the received memo data in association with the thumbnail view screen. For example, the cloud server 200 may store an input memo and thumbnail as a single entity by combining input memo and thumbnail. Alternatively, the cloud server 200 may store an input memo and thumbnail as separate entities, for example in different regions of memory.

A thumbnail view screen may comprise one or more thumbnails. One or more thumbnails may be stored as separate entities, and/or one or more thumbnails may be stored in groups. For example, all thumbnails of the thumbnail view screen may be stored together as a single entity as part of the thumbnail view screen.

The cloud server 200 may store an input memo and/or thumbnail together with coordinate information thereof, specifying the location or relative location of the input memo and/or thumbnail (e.g. the relative location of the input memo with respect to a thumbnail, or the location of the input memo with respect to the thumbnail view screen). Coordinate information of a memo and/or thumbnail may be determined, for example, with reference to the center of the canvas area as the origin.

An individual thumbnail may be associated with a single memo, or with a group of two or more memos. In certain embodiments, one or more thumbnails may not be associated with any memos. An individual memo may be associated with a single thumbnail, or with a group of two or more thumbnails. In certain embodiments, one or more memos may not be associated with any thumbnails (e.g. may be input as general memos).

The cloud server 200 enables sharing of a memo entered on the thumbnail view screen. That is, when a second electronic device with a valid access right accesses the sandbox, the cloud server 200 sends a thumbnail view screen containing the input memo to the second electronic device. Here, the transmitted thumbnail view screen may contain only memos set to be shareable. To this end, the cloud server 200 may store memo sharing information. Memo sharing information may be set independently of sandbox sharing information. When memo sharing information is not separately set, sandbox sharing information may also be used as memo sharing information.

The cloud server 200 may send a notification message indicating input of a new memo, as a registration of the new memo, on the thumbnail view screen. For example, the cloud server 200 may send such a notification message to various other electronic devices sharing the same sandbox or to a designated electronic device. Here, in the event that the memo is paired with a thumbnail representing a content item, the designated electronic device may be an electronic device of a user having registered the content item. The designated electronic device may also be an electronic device used to register a content item with which the memo is associated.

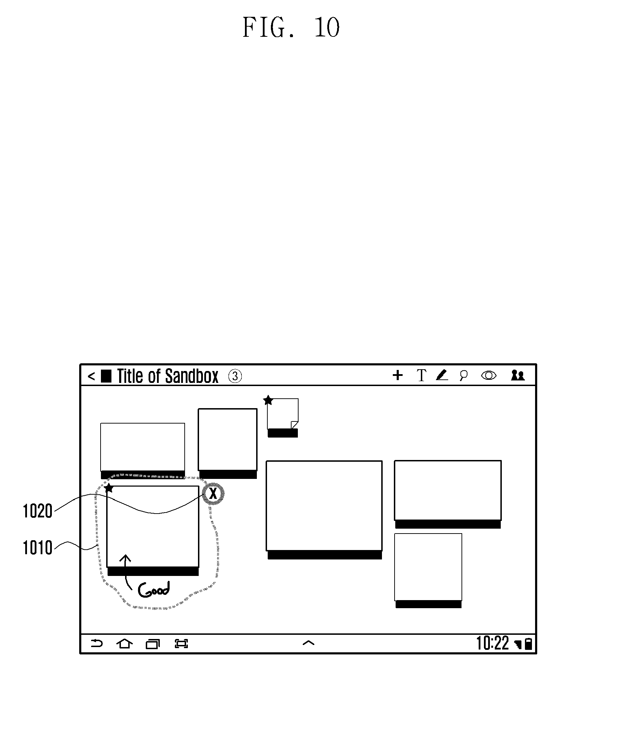

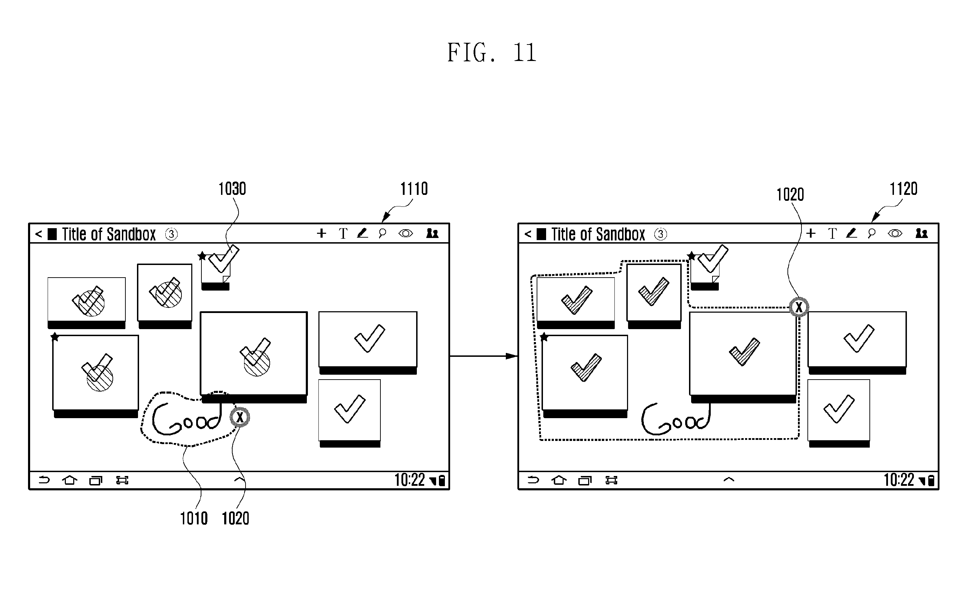

The cloud server 200 may receive information on an edit right (or permission or authorization) for the input memo from the electronic device 100 and store the same. When an edit request for a memo is received from an electronic device 100, the cloud server 200 may check whether the electronic device 100 possesses an edit right for the memo and, when the electronic device 100 possesses an edit right, send a message accepting the edit request to the electronic device 100. In addition, the cloud server 200 may receive information on a pairing between a memo and a thumbnail from the electronic device 100 and store the same. Pairings between a memo and a thumbnail is described in more detail later with reference to FIGS. 10 and 11.

As described above, in FIG. 1, the electronic device 100 may be any type of digital device capable of using cloud services, for example a laptop computer 101, smartphone 102, or tablet computer 103. The electronic device 100 may also be in the form of a mobile communication terminal, a handheld computer, a portable multimedia player (PMP), or a personal digital assistant (PDA). However, embodiments of the present invention are not limited to these types of devices. For example, embodiments of the present invention may also be implemented in the form of an IPTV set or a desktop computer, which are capable of using cloud services.

The electronic device 100 may connect to the cloud server 200, receive a thumbnail view screen of content items stored therein, and display the thumbnail view screen. When the cloud server 200 has multiple sandboxes, the electronic device 100 may receive a thumbnail view screen of content items stored in a sandbox selected by the user. Alternatively, the electronic device100 may receive information regarding content items stored in the cloud server 200 or stored in a selected sandbox, compose a thumbnail view screen displaying those content items as thumbnails, and display the composed thumbnail view screen.

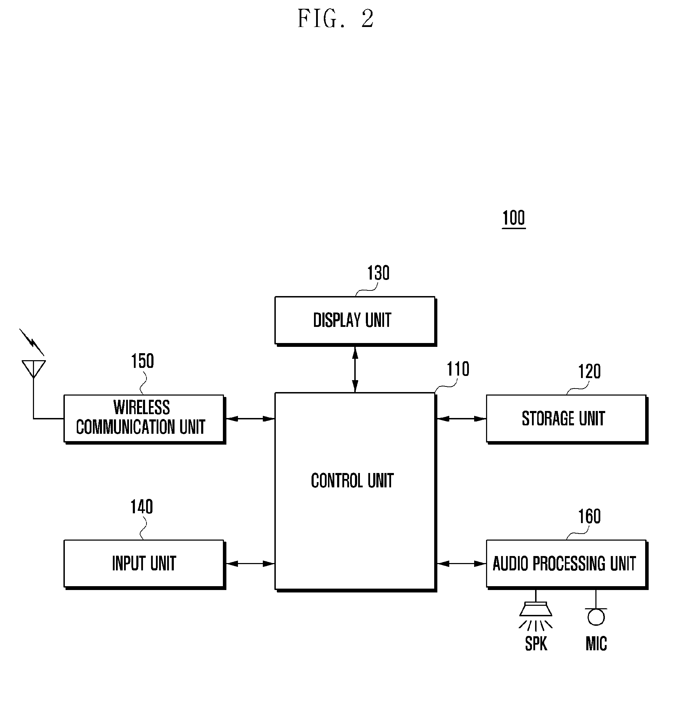

The electronic device 100 may detect a memo input on the thumbnail view screen. A memo may be written by inputting characters using a textbox and/or by inputting handwriting. Upon completion of memo input, the electronic device 100 may store the input memo. Here, a memo may be stored in a storage unit 120 in FIG. 2 of the electronic device 100 or in the cloud server 200. For example, the electronic device 100 may send a memo to be shared to the cloud server 200 for storage, and store a non-shared memo in its storage unit. The electronic device 100 may obtain coordinate information of the input memo on the canvas area and store the input memo together with the coordinate information in an associated form.

Upon completion of the memo input, the electronic device 100 may output a popup window for setting a sharing option and an edit right. The electronic device 100 may receive a notification message indicating input of a new memo by a different user from the cloud server 200. Upon reception of such a notification message, the electronic device 100 may output the notification message on the screen of the display unit 130 in FIG. 2, and output a sound effect indicating message reception through a speaker. In addition, the electronic device 100 may provide a pairing feature enabling the user to pair a memo with at least one thumbnail. The electronic device 100 may store such pairing information in the storage unit 120 in FIG. 2 and/or send the same to the cloud server 200.

FIG. 2 is a block diagram of the electronic device 100 shown in FIG. 1.

Referring to FIG. 2, the electronic device 100 may include an audio processing unit 160, a wireless communication unit 150, an input unit 140, a display unit 130, a storage unit 120, and a control unit 110.

The wireless communication unit 150 supports communication for the electronic device 100. When the electronic device 100 supports mobile communication, the wireless communication unit 150 may include a mobile communication module. In particular, to establish a communication channel to access the cloud server 200, the wireless communication unit 150 may include a communication module enabling access to the Internet or a communication module enabling access to a network facility connected to the Internet. The wireless communication unit 150 may support transmission and reception of authentication information needed to access the cloud server 200, reception of information regarding content items stored in the cloud server 200 or in a selected sandbox, reception of screen elements constituting a thumbnail view screen, transmission of user control data, and reception of result data corresponding to user control data. In the above description, the electronic device 100 is depicted as accessing the cloud server 200 through wireless communication. However, the present invention is not limited thereto. That is, the electronic device 100 may also connect to the cloud server 200 through wired communication.

The input unit 140 may include a plurality of alphanumeric and function keys for inputting alphanumeric information, characters, symbols, etc. and for setting various functions. The function keys may include direction, side and shortcut keys mapped with specific functions. The input unit 140 generates key signals for user settings and for controlling the electronic device 100 and sends the key signals to the control unit 110. The input unit 140 may be implemented using one of various input devices, for example a QWERTY keypad, a 3*4 keypad, a 4*3 keypad, a ball joystick, an optical joystick, a wheel key, a touch key, a touch pad and a touchscreen, or a combination thereof. When the electronic device 100 supports a full touchscreen feature (e.g. a touchscreen that occupies most or substantially all of a front surface of the electronic device), the input unit 140 may include only a volume key formed on a side of the case or housing of the electronic device 100 for volume adjustment and a power key for screen and power on/off. In particular, the input unit 140 may generate various input signals, for example an input signal for connecting the electronic device 100 to the cloud server 200, an input signal for entering authentication information, an input signal for selecting a desired sandbox, an input signal for writing a memo on the thumbnail view screen, an input signal for changing writing instruments, colors or transparency settings, and an input signal for transitioning to a pairing mode, and may send the generated input signals to the control unit 110. Generation of input signals and corresponding operations are described in more detail later with reference to the accompanying screen representations.

The audio processing unit 160 may output various audio data set for operation of the electronic device 100, and audio data produced by playback of an audio file stored in the storage unit 120 or received from an external source. The audio processing unit 160 may also collect audio data. To this end, the audio processing unit 160 may include a speaker SPK and a microphone MIC. In particular, the audio processing unit 160 may output various audio data related to the memo function based on a cloud service. For example, when a notification message indicating registration of a new memo is received from the cloud server 200, the audio processing unit 160 may output a preset sound effect through the speaker SPK.

The display unit 130 displays various menus of the electronic device 100, information input by the user, and information to be provided to the user. For example, the display unit 130 may output various screens in the course of using the electronic device 100, for example a home screen, a menu screen, message handling screen, a phonebook screen, and a webpage output screen. The display unit 130 may be implemented using liquid crystal display (LCD) devices or organic light emitting diodes (OLED). In the event that the display unit 130 includes a touch panel supporting a touch screen capability, the display unit 130 can also act as an input device performing in part or in whole the function of the input unit 140. In particular, the display unit 130 may display a notification message indicating registration of a new memo received from the cloud server 200 under the control of the control unit 110. The display unit 130 may output various interface screens related to the memo function based on a cloud service. For example, the display unit 130 may display a thumbnail view screen of content items stored in the cloud server 200, a screen for entering a memo on the thumbnail view screen, a screen for pairing an input memo with at least one thumbnail, a screen for setting a sharing option for the input memo, and a screen for setting an edit right for the input memo. Interface screens on the display unit 130 are described in more detail later with reference to the drawings.

The storage unit 120 may store an operating system of the electronic device 100, store application programs for audio playback, video playback and broadcast reception, and store user data and data sent and received during communication operations. For example, the storage unit 120 may store content such as moving image files, game files, music files and movie files. In particular, the storage unit 120 may store a cloud client program. The cloud client program may include a routine for accessing the cloud server 200, a routine for uploading and downloading content to and from the cloud server 200, a routine for receiving information on a thumbnail view screen and information needed to compose the thumbnail view screen, and a routine for writing a memo on the thumbnail view screen. The storage unit 120 may store an input memo, in particular, a non-shared memo, and information on an edit right, a sharing option and a pairing option of the memo.

The control unit 110 may control the overall operation of the electronic device 100, and may control signal exchanges between internal components thereof to perform data processing. The control unit 110 may include a central processing unit (CPU) and an application processor. In particular, the control unit 110 supports a memo function based on a cloud service. More specifically, in response to a request for access to the cloud server 200 issued from the input unit 140 or the display unit 130 acting as an input device, the control unit 110 may initiate a connection method using address information of the cloud server 200. Here, the control unit 110 may control the display unit 130 to output a menu or icon widget enabling access to the cloud server 200.

Upon successful connection to the cloud server 200, the control unit 110 controls an operation to receive screen data constituting a thumbnail view screen of content items from the cloud server 200 and to output the thumbnail view screen on the display unit 130. Here, the control unit 110 may control an operation to receive a thumbnail view screen from the cloud server 200, or may control an operation to receive information on content items stored in the cloud server 200 and compose a thumbnail view screen using the received information. That is, the thumbnail view screen may be composed by the cloud server 200 or by the electronic device 100.

Thereafter, the control unit 110 may control a sequence of operations for memo input on the thumbnail view screen, pairing a memo with a thumbnail, setting a sharing option for a memo, and setting an edit right for a memo. Operations of the control unit 110 are described in detail later.

The electronic device 100 shown in FIG. 2 may further include one or more supplementary components, such as a global positioning system (GPS) receiver for collecting location information, a broadcast reception module for playing digital broadcasts, a digital media player, for example an MP3 player, an Internet communication module for Internet access, and a motion sensor module for detecting terminal motion. With the trend towards digital convergence (e.g. the provision of multiple-functionality, traditionally provided by separate devices, within a single device), the electronic device 100 may comprise any suitable combination of components. For example, one or more of the above-described components may be replaced with a component having equivalent, comparable or similar functionality, one or more of the above-described components may be removed, and/or one or more additional or alternative components may be provided.

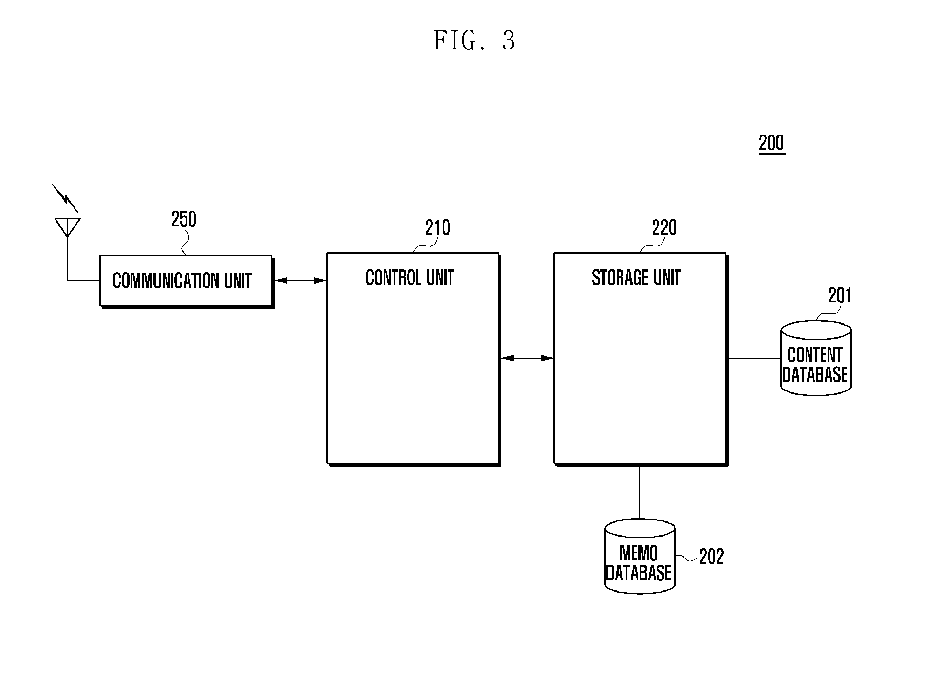

FIG. 3 is a block diagram of the cloud server 200 shown in FIG. 1.

Referring to FIG. 3, the cloud server 200 may include a communication unit 250, a storage unit 220, and a control unit 210. To support cloud services, the cloud server 200 may further include or be connected to a content database 201 and a memo database 202. Here, the content database 201 and memo database 202 may be contained in the storage unit 220.

The content database 201 is used to store content items uploaded by users. Here, actual content data may be stored in the content database 201 and pointer information for the content data stored in the content database 201 may be stored in the storage unit 220. The cloud server 200 having the above configuration may provide a thumbnail view screen to each electronic device 100. When a change occurs on the thumbnail view screen according to user manipulation, the cloud server 200 may retrieve thumbnails corresponding to such a change from the content database 201. In this manner, the cloud server 200 retrieves content information from the content database 201 to provide the same only when the content information is actually needed, and uses thumbnails in other situations. Thereby, the cloud server 200 may minimize system load due to utilization of content items.

The memo database 202 may be used to store memo information sent by the electronic device 100. Here, the memo information may include actual memo data (e.g. data defining the text, figure and/or image of the memo) and coordinate information of the memo in the canvas area. The memo database 202 may be used to store information on the edit right of a memo. The edit right for a memo may be set at, for example, one of two or more (e.g. three) levels. In one example, at a first level, only the writer of the memo is permitted to edit the memo; at a second level, all users allowed to access the corresponding sandbox are permitted to edit the memo; and at a third level, a popup window enabling edit right selection is output whenever memo input is made. For example, the edit right for a memo may be preset by the user on a per sandbox basis. For example, a memo entered on a thumbnail view screen related to a sandbox with the first level edit right may be given the first level edit right; a memo entered on a thumbnail view screen related to a sandbox with the second level edit right may be given the second level edit right; and a memo entered on a thumbnail view screen related to a sandbox with the third level edit right may be given the first or second level edit right according to selection on the corresponding popup window. In certain embodiments, only some users allowed to access the corresponding sandbox may be granted an edit right for a memo.

A memo stored in the memo database 202 may be shared in various ways. For example, in the following, the memo database 202 may be shared in three ways. First, users having a pertinent right may access the same sandbox and examine memos displayed on their thumbnail view screens in real time. Second, a first user having a pertinent right may capture an image of the thumbnail view screen and send the captured image to a second user without a right to access the corresponding sandbox through an SMS message, a MMS message, an e-mail, an SNS message, or an instant message. Third, a first user having written a memo may send coordinate information of the memo to a second electronic device, and the user of the second electronic device may select the received coordinate information to view the memo.

The communication unit 250 is configured to establish a communication channel to the electronic device 100 and support data transmission and reception for providing cloud services to the electronic device 100. In particular, when the electronic device 100 is connected to the cloud server 200, the communication unit 250 may send, to the electronic device 100, screen data constituting a thumbnail view screen of content items stored in the cloud server 200 under the control of the control unit 210. Alternatively, the communication unit 250 may send the electronic device 100 information regarding content items stored in the cloud server 200, so that the electronic device 100 may generate a thumbnail view screen. When a user control signal is received from the electronic device 100, the communication unit 250 may forward the user control signal to the control unit 210. Thereafter, the communication unit 250 may send screen data updated according to the control signal to the electronic device 100 under the control of the control unit 210.

The storage unit 220 may store an operating system of the cloud server 200 and various programs needed to provide cloud services. For example, the storage unit 220 may store a cloud server program corresponding to the cloud client program of the electronic device 100. In particular, the cloud server program may support the memo function based on a cloud service of the present invention. The cloud server program may include a routine for handling an access request from the electronic device 100, a routine for authenticating the electronic device 100 having sent an access request, a routine for providing a thumbnail view screen of content items contained in a requested sandbox, a routine for handling an input signal from the electronic device 100, a routine for providing screen data updated according to the input signal, a routine for pairing a memo with at least one thumbnail, and a routine for setting an edit right for an input memo. The cloud server program may be loaded in the control unit 210 to support cloud services when the cloud server 200 is activated.

The control unit 210 may control signal processing and distribution, and data update and removal to properly operate the cloud server 200. In particular, the control unit 210 may control an operation to authenticate the electronic device 100 making an access request. When a control signal for memo input and management is received from the electronic device 100, the control unit 210 may control an operation to perform a screen update according to the control signal. For example, the control unit 210 may receive a control signal for storing a memo from the electronic device 100, a control signal for setting a sharing option or edit right for an input memo, a control signal for resizing or repositioning a thumbnail or changing characteristics (e.g. types, colors and transparency) of electronic writing instruments or drawing tools (e.g. cursors and icons on the screen), or a control signal for pairing a memo with at least one thumbnail or pairing a thumbnail with at least one memo. Upon reception of a control signal from the electronic device 100, the control unit 210 may control an operation to process the received control signal and send screen data updated accordingly to the electronic device 100. Operations of the control unit 210 are described in more detail later with reference to the drawings.

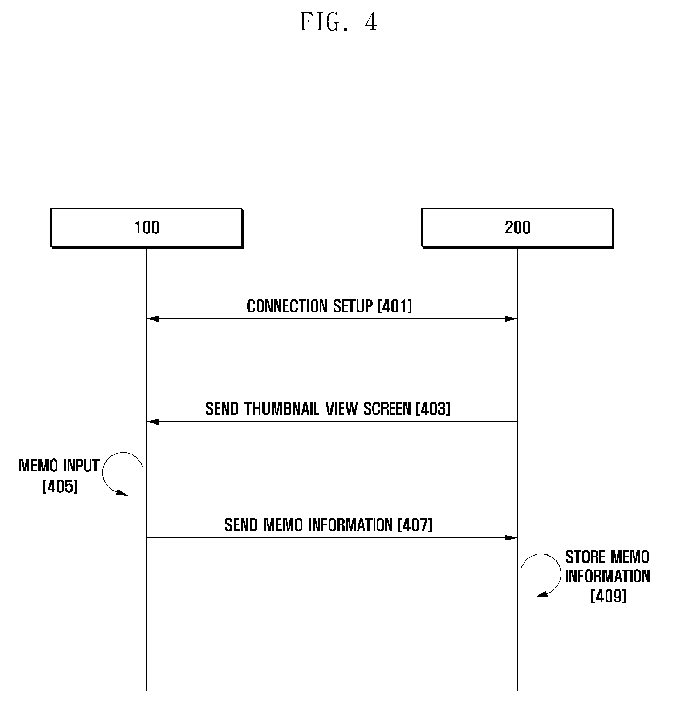

FIG. 4 is a sequence diagram of a method for providing a memo function based on a cloud service according to an exemplary embodiment of the present invention.

Referring to FIG. 4, in the method for providing a memo function based on a cloud service, the electronic device 100 connects to the cloud server 200 by performing a connection setup method in step 401. Specifically, the electronic device 100 may send an access request message to the cloud server 200 using address information such as a URL or an IP thereof. The cloud server 200 may authenticate the electronic device 100 and accept the access request when authentication is successful. For authentication, the electronic device 100 may send authentication information such as an ID and a password to the cloud server 200, which may then verify validity of the authentication information.

Upon connection establishment, the cloud server 200 sends a thumbnail view screen of content items to the electronic device 100 in step 403. In the event that multiple sandboxes are present, the cloud server 200 may send a list of sandboxes to the electronic device 100 and provide a thumbnail view screen of content items contained in a sandbox selected by the electronic device 100. In certain exemplary embodiments, the cloud server 200 may send only information on content items stored therein or contained in a selected sandbox to the electronic device 100, which may then compose and display a thumbnail view screen on the basis of the received information.

The thumbnail view screen represents all content items stored in a specific sandbox of the cloud server 200 as thumbnails in one area (the canvas area). Here, the thumbnail view screen provided by the cloud server 200 to the electronic device 100 may reflect the status of content items at the time when the content items were last used by the electronic device 100. In the case that the sandbox is shared by multiple users, the thumbnail view screen provided by the cloud server 200 to the electronic device 100 may reflect the status of content items at the time when the content items were last used or modified by a different electronic device.

On the thumbnail view screen, thumbnails representing content items for example photographs, documents, moving images and audio data may be displayed with different characteristics (e.g. shapes or colors) according to content types for easy distinction. For example, thumbnails may have different shapes or colors according to the electronic devices or users having uploaded the corresponding content items, and/or according to attributes of the corresponding content items, for example data size, upload date, number of downloads, and/or number of views. The user may resize or move a thumbnail on the thumbnail view screen.

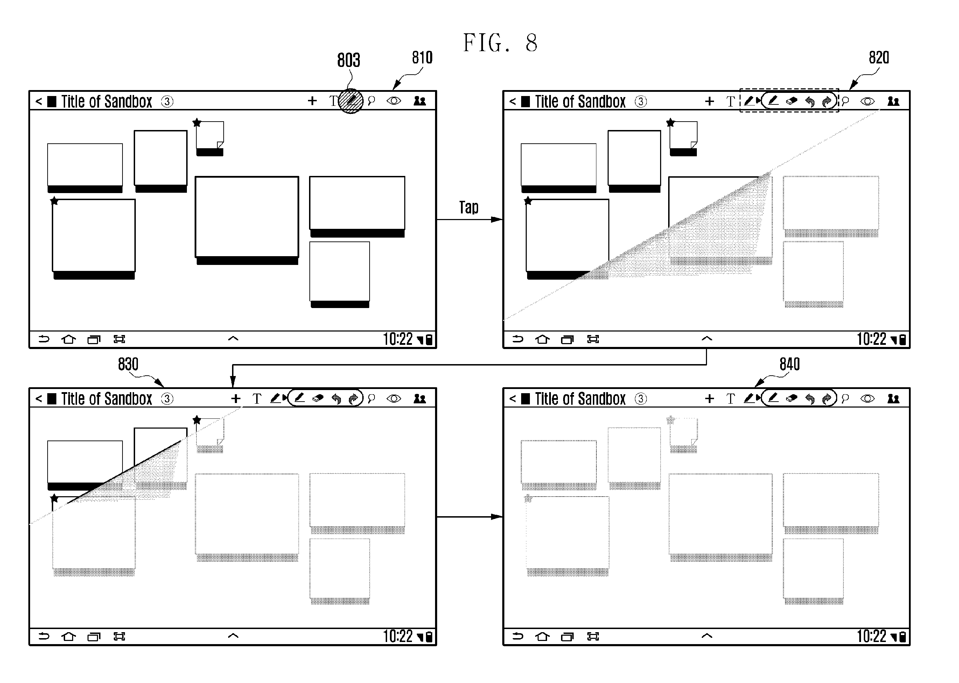

After reception or generation of the thumbnail view screen, the electronic device 100 detects a memo input in step 405. As described before, a memo may be entered, for example, in a textbox on the thumbnail view screen through the input unit 140 or a virtual keypad on the display unit 130. When the display unit 130 supports a touch screen feature, a memo may be entered, for example, at a portion of the thumbnail view screen through handwriting using a stylus pen or finger. Here, memos and thumbnails may be displayed together on the same layer or may be separately displayed on different layers. For example, layers may be used to logically separate different elements of a displayed image, for example to facilitate manipulation, editing, modifying, deleting, adding and/or processing of elements in different layers. For example, the electronic device 100 may display thumbnails of content items on a first layer and display memos on a second layer overlapping with the first layer. In the event that memos are displayed on the second layer, when the memo function is activated, the electronic device 100 may generate and produce an animation effect depicting overlap of the second layer on the first layer after a preset duration, which is described in more detail later with reference to FIG. 8.

After completion of the memo input, the electronic device 100 sends memo information of the input memo to the cloud server 200 in step 407. The memo information may include actual memo data and coordinate information of the input memo. Coordinate information of a memo may be determined, for example, with reference to the center of the canvas area as the origin. Upon reception of the memo information, the cloud server 200 stores the memo information in association with the thumbnail view screen in step 409. The cloud server 200 may store memos and thumbnails separately in different storage spaces (e.g. the content database 201 and the memo database 202) or together in the same storage space.

When a new memo is received from the electronic device 100, the cloud server 200 may send a notification message indicating new memo input to different electronic devices sharing the sandbox. The cloud server 200 may not send such a notification message or may send the same notification message only to a designated electronic device according to stored settings.

In the above description, an input memo is stored in the cloud server 200. However, when the sharing option is not set for the input memo, the electronic device 100 may store the input memo in the storage unit 120 without sending the input memo to the cloud server 200. To this end, when a memo is entered, the electronic device 100 may output a popup window prompting the user to set a sharing option. In addition, when the sharing option is set for the memo, the electronic device 100 may output a popup window prompting the user to set an edit right for the memo. The edit right for a memo may be set so as to allow only the writer to edit the memo, allow any user to edit the memo, or allow some users with a pertinent right to edit the memo.

The electronic device 100 may pair the input memo with at least one thumbnail. For example, the electronic device 100 may automatically pair the input memo with a thumbnail closest thereto. The electronic device 100 may pair a memo with at least one thumbnail according to a user selection. For example, the user may activate a pairing mode after selecting a memo. Upon activation of the pairing mode, the electronic device 100 may display toggle buttons on thumbnails. The user may touch (e.g. tap) at least one toggle button to select at least one thumbnail. When the pairing mode is terminated, the electronic device 100 may store pairing information between the selected memo and the selected thumbnail in the storage unit 120 or send the pairing information to the cloud server 200.

When a memo is paired with at least one thumbnail, the electronic device 100 may display a demarcation line along the periphery or visual borders of the paired memo and thumbnail for easy distinction. Here, the demarcation line may include a cancel button for unpairing the paired memo and thumbnail.

In the event that a memo is paired with a thumbnail, when one of the paired memo and the thumbnail is moved or resized, the other is also moved or resized. When the user enlarges the thumbnail, the paired memo may also be enlarged correspondingly, and when the user moves the thumbnail, the paired memo may also be moved correspondingly, as described in more detail later with reference to FIGS. 10 and 11.

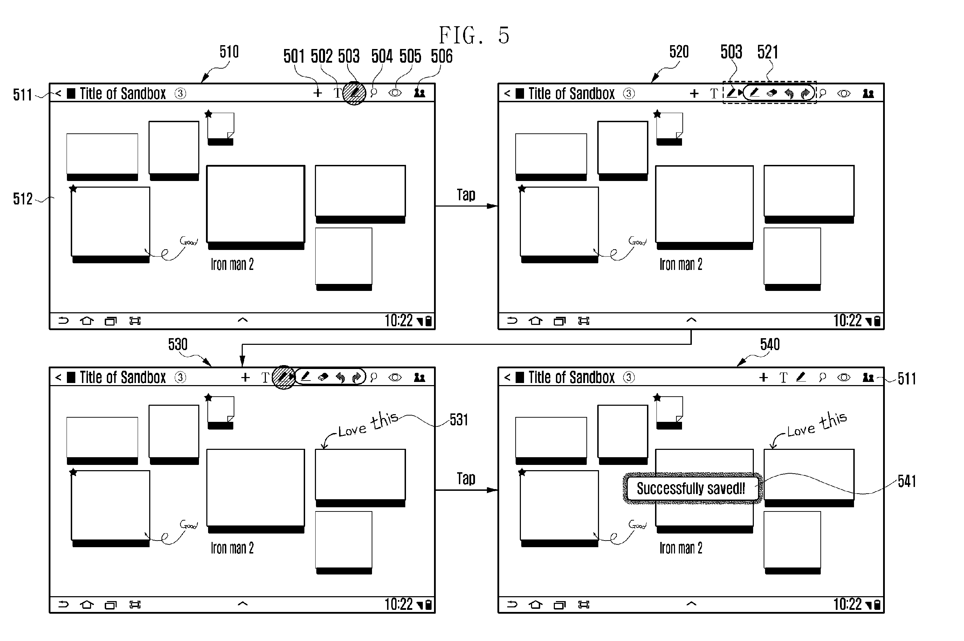

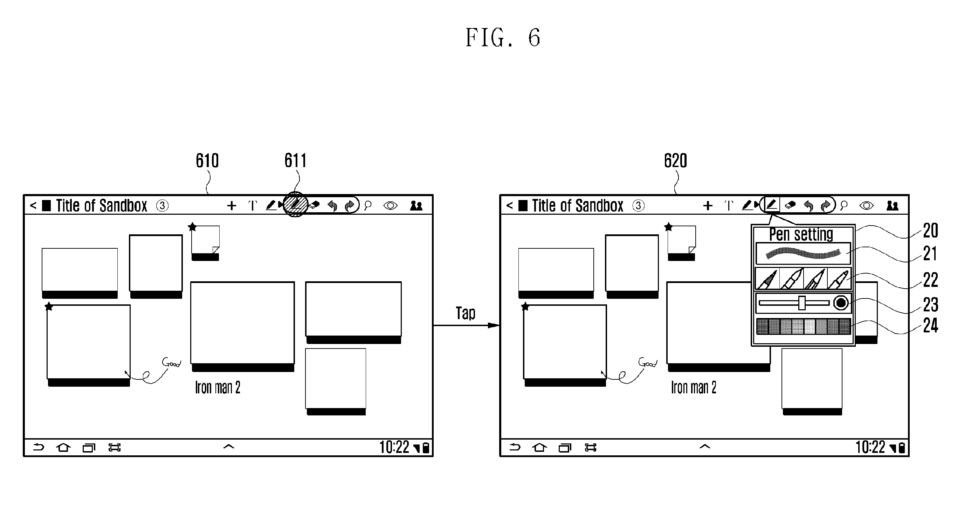

FIG. 5 illustrates screen representations for writing a memo according to a first exemplary embodiment of the present invention, and FIG. 6 illustrates screen representations for changing writing instruments according thereto.

Referring to FIG. 5, after connecting to the cloud server 200 in response to a user request, the electronic device 100 may receive a thumbnail view screen 510 and display the same on the display unit 130. On the thumbnail view screen 510, thumbnails represent stored content items. Thumbnails may have different characteristics (e.g. shapes or colors), according to various properties, for example according to content types, for example photographs, documents, moving images and audio data, and/or according to the electronic devices or users having uploaded the corresponding content items, and/or according to attributes of the corresponding content items, for example data size, upload date, number of downloads, and number of views. The user may resize or move a thumbnail on the thumbnail view screen.

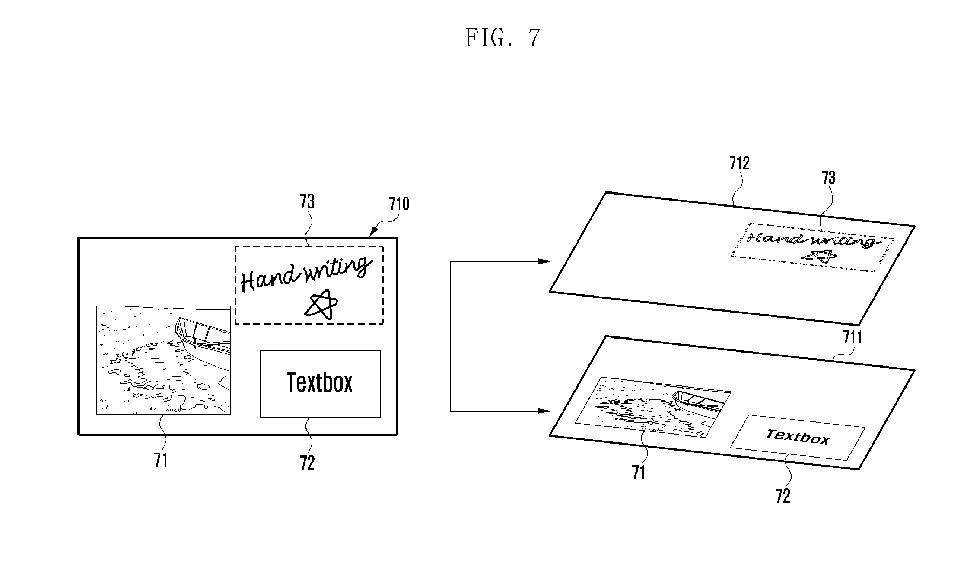

The thumbnail view screen 510 may include a view area 512 as a part of the canvas area displaying thumbnails, and a menu region 511 to present various menu entries. The menu region 511 may include a menu entry 501 for a content addition, a menu entry 502 for a textbox addition, a menu entry 503 for a handwriting input, a menu entry 504 for a search, a menu entry 505 for a view mode change, and a menu entry 506 for listing sharing users. The menu entries in the menu region 511 may vary, for example according to the design of the manufacturer of the electronic device 100, or according to usage states of the electronic device 100. As shown in the thumbnail view screen 510 in FIG. 5, a memo comprising the text "good" created through handwriting and a memo comprising the text "Iron man 2" created through a text box are already present. The textbox may be implemented by the textbox 72 shown in FIG. 7. These memos may have been created by the user of the electronic device 100 or by another user sharing the same sandbox.

In a state of the thumbnail view screen 510 shown in FIG. 5, the user may write a new memo using the menu entry 502 for a textbox addition or menu entry 503 for a handwriting input among the menu entries in the menu region 511. For example, the user may tap the menu entry 503, as indicated by the shaded circle about the menu entry 503 in the upper left screen 51 0 in FIG. 5, for handwriting input.

When the menu entry 503 for handwriting input is selected (e.g. tapped), new screen indicated by numeral 520 is generated and displayed, as shown in the upper right part of FIG. 5. In screen 520, the electronic device 100 may enlarge the menu entry 503 and output submenu entries 521 for handwriting input. Here, the submenu entries 521 for handwriting input may include, for example, entries for performing writing instrument selection, erasure, undo and redo. In an exemplary embodiment, the submenu entries 521 may include different entries. Instead of extending the menu entry 503 for handwriting input, the electronic device 100 may display only the submenu entries 521 without outputting the menu entries 501 to 506 of the menu region 511.

Thereafter, the user may create a memo comprising the text "Love this" 531 using a stylus pen or finger. The result of creating memo 531 is illustrated in new screen 530 shown in the lower left part of FIG. 5. After creating the memo 531, the user may tap the menu entry 503 for ending handwriting input. When the menu entry 503 is selected (e.g. tapped), the electronic device 100 may store the new memo 531 in the storage unit 120 or in the cloud server 200 and output a popup window 541 over a screen 540, shown in the lower right of FIG. 5, with a message, for example "Successfully saved!" indicating completion of memo storage. In the menu region 511, the submenu entries 521 are then removed and the menu entry 503 for handwriting input is returned to its original state. Before sending the new memo 531 to the cloud server 200, the electronic device 100 may output a popup window, or one of the commands in the menu region 511 and the submenu entries 521, may be used for setting an edit right for the memo 531. When an edit right option is selected from the popup window, the electronic device 100 may send the new memo 531 together with the edit right option to the cloud server 200.

In addition, for handwriting input, the user may change character sizes and colors, and writing instruments by use of the submenu entries 521. In a more specific example, referring to FIG. 6, in a state in which the menu entry 503 for handwriting input is activated, the user may select (e.g. tap) a menu entry 611 on a screen 610, represented by the shaded circle in FIG. 6, for writing instrument setting among the submenu entries 521. When the menu entry 611 for writing instrument setting is selected (e.g. tapped), the electronic device 100 may output a subsidiary screen 20 on the screen 620 in FIG. 6 for setting a writing instrument. Here, the subsidiary screen 20 may include a preview region 21, an instrument type selection region 22, a transparency setting region 23, and a color setting region 24. Writing instruments in the instrument type selection region 22 have assigned colors and widths. These setting values may be changed by the user. That is, the user may set or change the writing instruments in various ways through the subsidiary screen 20. The skilled person will appreciate that FIG. 6 depicts exemplary screens in an exemplary embodiment of the present invention, and that the present invention is not limited to or by the screens shown in FIG. 6.

In certain embodiments, for example certain embodiments described above, memos and thumbnails may be arranged in the same layer. Next, a description is given of an embodiment in which memos and thumbnails are arranged in different layers.

FIG. 7 illustrates screen representations for a memo writing method according to a second exemplary embodiment of the present invention.

Referring to FIG. 7, in the memo writing method according to the second exemplary embodiment, memos and thumbnails are arranged in different layers. For example, in the thumbnail view screen 710, or a region of the thumbnail view screen of the display unit 130, as shown in the screen on the left of FIG. 7, the electronic device 100 displays a thumbnail 71, a textbox 72, and a handwritten memo 73 on the thumbnail view screen 710. Here, the thumbnail 71 and textbox 72 are arranged in a first layer 711, and the handwritten memo 73 is arranged in a second layer 712. That is, as shown in the representation on the right of FIG. 7, the first layer 711 and the second layer 712 overlap to compose the thumbnail view screen 710. In the second exemplary embodiment of the present invention, as the memo 73 is arranged in a separate layer, the memo 73 may be edited without affecting the thumbnail 71. In FIG. 7, the textbox 72 is arranged in the first layer 711. However, as the textbox 72 may also be used for memo writing, the present invention may provide the textbox 72 in the second layer 712.

FIG. 8 illustrates screen representations for memo writing according to the second exemplary embodiment of the present invention.

The memo writing method of the second exemplary embodiment illustrated in FIG. 8 is similar to that described in FIGS. 5 and 6, except that a first layer for thumbnails and a second layer for memos are displayed in an overlapping manner. As indicated by the screens 810 to 840 in FIG. 8, when the menu entry 803 for handwriting input is selected (e.g. tapped), represented by the shaded circle in the screen 810 in the upper left of FIG. 8, the electronic device 100 may produce an animation effect where the second layer is overlaid from one end to the other end on the screen during a preset duration, as shown in the changing of screens 810 to 840. Here, the transparency of the second layer may not be 100 percent in FIG. 8. However, the transparency of the second layer may be varied according to design settings, user settings, or preset settings for the levels of transparency. For example, while the animation is in progress, the transparency of the second layer may be set so that the second layer is visually distinguished from the first layer; and when the animation ends (when the second layer completely covers the first layer), the transparency of the second layer may be set to 100 percent. In the event that a memo and a thumbnail are arranged on different layers, although the thumbnail is resized or moved, the memo retains its original size and position; and conversely, although the memo is resized or moved, the thumbnail retains its original size and position.

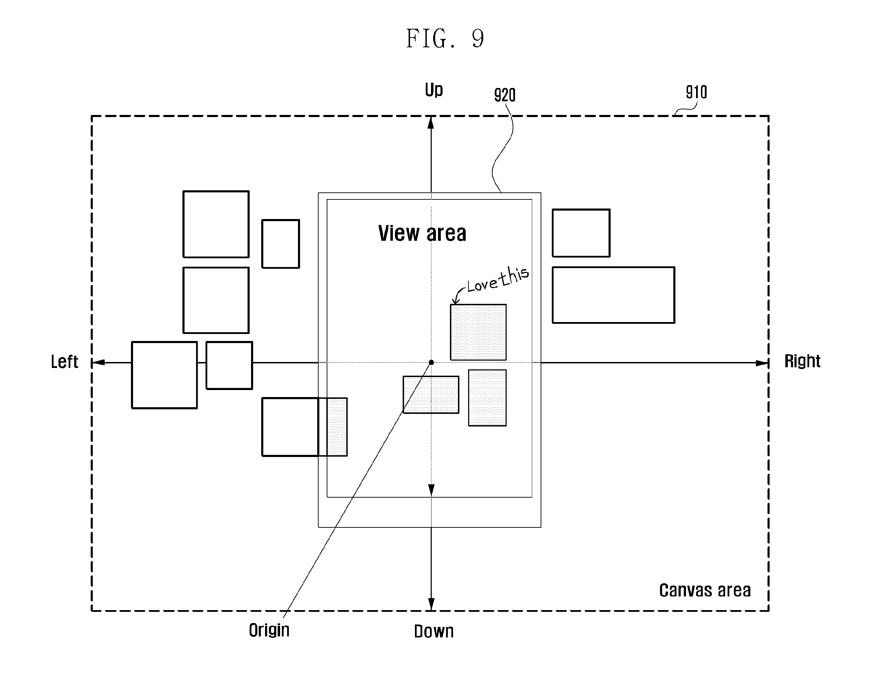

FIG. 9 illustrates computation of coordinate information of a memo.

Referring to FIG. 9, the electronic device 100 may display content items and memos in a preset canvas area 910. Here, content items may be represented by thumbnails. The electronic device 100 may display a portion of the canvas area 910. To view a hidden region of the canvas area 910, the user may scroll the view area 920 up, down, left or right. Each thumbnail of a content item or each memo may be associated with coordinate information, for example a horizontal coordinate and vertical coordinate using Cartesian coordinates with reference to, for example, the center of the canvas area 910 as the origin. Alternative predetermined coordinate systems, for example radial coordinates or polar coordinates, may also be used. When thumbnails and memos are stored in different storage spaces (for example, in the content database 201 and memo database 202), the coordinate information may be used by the electronic device 100 or cloud server 200 to display a thumbnail and a memo in combination on the canvas area 910.

FIGS. 10 and 11 illustrate screen representations for pairing a memo with at least one thumbnail.

The electronic device 100 may pair a memo with at least one thumbnail. Pairing information may be stored in the electronic device 100 or in the cloud server 200. In certain embodiments, the pairing information may be set to be modifiable only by a particular user. For example, the electronic device 100 may pair an input memo with a thumbnail closest thereto. For example, referring to FIG. 10, the user may enter a word "Good" and an arrow through handwriting input at a lower left end of the screen. The electronic device 100 may automatically select a thumbnail to be paired with the input memo. For example, the electronic device 100 may select a thumbnail overlapping with the input memo. In FIG. 10, a thumbnail overlapping with the arrow may be selected for pairing. When there is no thumbnail overlapping with the input memo, the electronic device 100 may select a thumbnail based on distance, for example the electronic device 100 may select a thumbnail closest to the input memo on the basis of distances on the screen from the input memo to thumbnails.

Upon completion of a pairing, the electronic device 100 may output a demarcation line 1010 along the periphery or borders of the paired memo and thumbnail for easy distinction. The demarcation line 1010 may include a cancel button 1020 for unpairing the paired memo and thumbnail.

In addition, the user may pair the input memo with multiple thumbnails. For example, referring to FIG. 11, the user may enter a memo and then activate a pairing mode in the screen 1110 to the left in FIG. 11. The pairing mode may be activated, for example, by entering a preset key, selecting a preset menu entry or entering a touch (long touch or double touch) on the memo. Upon activation of the pairing mode, the electronic device 100 may display a demarcation line 1010 and a cancel button 1020 around the input memo comprising the text "Good". In addition, to indicate activation of the pairing mode, the electronic device 100 may place a toggle button 1030 on each thumbnail in the screen 1110 or may slightly darken the thumbnails.

During the pairing mode, the user may select one or more thumbnails to be paired with the input memo "Good", or may terminate the pairing mode by touching (e.g. tapping) the cancel button 1020. When multiple thumbnails are selected, as indicated by the shaded circles over selected thumbnails on the screen 1110, to indicate such selection, the electronic device 100 may display the thumbnails in a manner that the selected thumbnails are visually distinguished from the other thumbnails. For example, the electronic device 100 may change the color of the toggle buttons 1030 on the selected thumbnails as shown on the screen 1120 to the right of FIG. 11, or may restore the brightness of the selected thumbnails to the original state.

After the thumbnail selection, the electronic device 100 may pair the input memo "Good" with the selected thumbnails for grouping, as shown in the screen 1120 in which the demarcation line 1010 is extended around every selected thumbnail. Upon termination of the pairing mode, the electronic device 100 may expand the demarcation line 1010 so that the input memo and the selected thumbnails are enclosed within the demarcation line 1010. Here, the demarcation line 1010 may be gradually expanded whenever a new thumbnail is selected. Upon termination of the pairing mode, the electronic device 100 may send the pairing information to the cloud server 200, enabling the pairing information to be shared with other users.

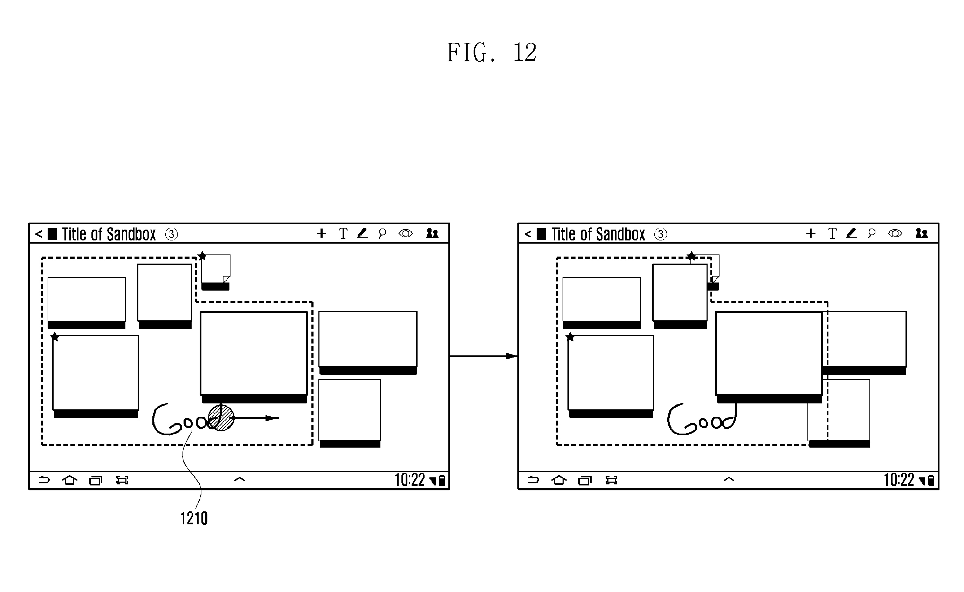

FIG. 12 illustrates screen representations for moving a memo paired with at least one thumbnail.

In the event that a memo is paired with a thumbnail, when one of the paired memo and thumbnail is moved or resized, the electronic device 100 or cloud server 200 may move or resize the other correspondingly. For example, when the user touches a memo 1210 and moves to right, the electronic device 100 may also moves a thumbnail paired with the memo to right as illustrated in FIG. 12. In addition, when the user doubles the size of a thumbnail, the electronic device 100 may also double the size of a memo paired with the thumbnail.

In certain embodiments of the present invention, methods, apparatus and systems for providing a memo function based on a cloud service enable a user of the electronic device 100 to freely enter a memo on a thumbnail view screen displaying content items stored in the cloud server 200 as thumbnails. In certain embodiments, as memos and thumbnails are stored in separate layers, a memo may be added, deleted and edited without affecting a thumbnail. In certain embodiments, an input memo may be shared by multiple users using a cloud service. In certain embodiments, a right to edit may be assigned to an input memo. In certain embodiments of the present invention, a memo may be paired with at least one thumbnail and be stored together with such association information. Hence, in certain embodiments, a memo and a paired thumbnail may be managed in a coordinated manner.

It will be appreciated that embodiments of the present invention can be realized in the form of hardware, software, or any combination of hardware and software. For example, the methods for providing a memo function based on a cloud service of embodiments of the present invention may be implemented as computer programs and may be stored in various non-transitory computer readable storage media. The non-transitory computer readable storage media may store program instructions, data files, data structures and combinations thereof. The program instructions may include instructions developed specifically for embodiments of the present invention and existing general-purpose instructions known to persons skilled in the art. The non-transitory computer readable storage media may include hardware devices specially designed to store and execute program instructions, and may include magnetic media, for example a hard disk, floppy disk and magnetic tape, optical media such as a CD-ROM and DVD, magneto-optical media such as a floptical disk, and memory devices, for example a ROM, RAM and flash memory. The program instructions may include machine codes produced by compilers and high-level language codes executable through interpreters. Each hardware device may be replaced with one or more software modules to perform operations according to embodiments of the present invention, and vice versa.

The above-described apparatus, systems and methods according to embodiments of the present invention may be implemented in hardware or firmware, or as software or computer code, or combinations thereof. Various components such as a controller, a central processing unit (CPU), a processor, and any unit or device described herein includes at least hardware and/or other physical structures and elements. In addition, the software or computer code may also be stored in a non-transitory recording medium, for example a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods, apparatus and systems described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium such as communication signals transmitted by wire/wireless connections, and their equivalents. The programs and computer readable recording medium can also be distributed in network-coupled computer systems so that the computer readable code is stored and executed in a distributed fashion.

It will be appreciated that the storage devices and storage media are certain embodiments of machine-readable storage that are suitable for storing a program or programs comprising instructions that, when executed, implement embodiments of the present invention. Accordingly, certain embodiments of the present invention provide a program comprising code for implementing an apparatus, system or method according to any aspect or claim disclosed herein, and a machine-readable storage storing such a program.

Although various exemplary embodiments of the present invention have been described herein, with reference to the accompanying drawings, the skilled person will appreciate that various modifications of these embodiments may be made without departing from the scope of the present invention, as defined by the claims. Therefore, the present invention is not limited to the above-described exemplary embodiments, but is defined by the appended claims.

## Claims

1. A method for providing a memo function based on a cloud service, the method comprising the steps of:
displaying a thumbnail view screen representing content items as thumbnails which are stored in a cloud server providing cloud services;
detecting a memo input on the thumbnail view screen; and
storing the input memo in association with the thumbnail view screen.

2. The method of claim 1, wherein the step of detecting the memo input comprises at least one of:
outputting a textbox on the thumbnail view screen and entering information in the textbox through character input; and
entering information on the thumbnail view screen through handwriting input.

3. The method of claim 1 or 2, wherein the step of displaying the thumbnail view screen comprises displaying a first layer containing thumbnails and a second layer containing the input memo in an overlapping manner.

4. The method of claim 3, comprising the further step of, when the memo function is activated, generating an animation effect in which the first layer and second layer are completely overlapped after a preset duration.

5. The method of any preceding claim, wherein the step of storing the input memo comprises one of:
storing the input memo in a storage space different from a storage space in which thumbnails representing content items are stored; and
storing the input memo in the same storage space in which thumbnails representing content items are stored.

6. The method of claim 5, wherein the step of storing the input memo in a different storage space comprises the further step of storing coordinate information of the memo computed with reference to the center of a canvas area displaying thumbnails of content items as the origin.

7. The method of any preceding claim, wherein the step of storing an input memo comprises pairing the input memo with at least one thumbnail.

8. The method of claim 7, wherein the step of pairing the input memo with at least one thumbnail comprises at least one of:
automatically pairing the input memo with a thumbnail closest thereto on the thumbnail view screen; and
pairing the input memo with at least one thumbnail selected by a user.

9. The method of any preceding claim, wherein the step of storing the input memo further comprises setting a sharing option and an edit right for the input memo.

10. The method of any preceding claim, comprising the further step of receiving a notification message indicating a new memo registration when the input memo is written on the thumbnail view screen.

11. A system for providing a memo function based on a cloud service, the system comprising:
a cloud server for storing content items and providing cloud services; and
at least one electronic device for connecting to the cloud server, displaying a thumbnail view screen, displaying thumbnails of content items stored in the cloud server, and storing, upon detection of a memo input on the thumbnail view screen, the input memo in association with the thumbnail view screen.

12. The system of claim 11, wherein the electronic device is configured to create the input memo on the thumbnail view screen by outputting a textbox on the thumbnail view screen and entering information in the textbox through character input or by entering information on the thumbnail view screen through handwriting input using a touch input device.

13. The system of claim 11 or 12, wherein the electronic device is configured to display thumbnails on a first layer and display the input memo on a second layer overlapping with the first layer, wherein the first and second layers constitute the thumbnail view screen.

14. The system of claim 11, 12 or 13, wherein, when the input memo is input, the electronic device is configured to send the cloud server memo information together with information on a sharing option and edit right for the memo.

15. The system of any of claims 11 to 14, wherein, when the input memo is input, the cloud server is configured to send a notification message indicating a new memo registration to another electronic device.

16. The system of any of claims 11 to 15, wherein the electronic device is configured to pair the input memo with at least one thumbnail, and send pairing information to the cloud server.

17. The system of claim 16, wherein in the event that the input memo is paired with a selected thumbnail, when one of the paired memo and thumbnail is moved or resized, the electronic device is configured to move or resize the other paired memo and thumbnail correspondingly.

18. The system of any of claims 11 to 17, wherein the cloud server is configured to store content items and memos in different storage spaces, and/or stores content items and memos together in the same storage space.

19. An electronic device for supporting a memo function based on a cloud service, the electronic device comprising:
a wireless communication unit for accessing a cloud server providing cloud services;
a display unit for displaying a thumbnail view screen and displaying thumbnails of content items which are stored in the cloud server;
an input unit for entering a memo on the thumbnail view screen; and
a control unit for controlling storage of the input memo in association with the thumbnail view screen.

20. The electronic device of claim 19, wherein, when the memo is input, the control unit is configured to control an operation for sending memo information together with information on a sharing option and edit right for the input memo to the cloud server, so that the input memo is shared by another electronic device.
